# EUROPEAN PATENT SPECIFICATION

(11) **EP 2 123 020 B1**
(45) Date of publication and mention of the grant of the patent: **11.04.2012**
(21) Application number: 08741513.9
(22) Date of filing: 23.04.2008
(51) Int. Cl.: H04N 5/765, H04N 5/76, H04N 7/173, G11B 27/034

(54) **OPERATING METHOD OF INTERNET PROTOCOL TELEVISION INCLUDING STORAGE UNIT AND INTERNET PROTOCOL TELEVISION ENABLING OF THE METHOD**
BEDIENUNGSVERFAHREN FÜR IP-TV MIT SPEICHEREINHEIT UND FÜR DIESES VERFAHREN GEEIGNETES IP-TV
PROCÉDÉ DE FONCTIONNEMENT DE TÉLÉVISION UTILISANT LE PROTOCOLE INTERNET COMPRENANT UNE UNITÉ DE STOCKAGE ET UNE TÉLÉVISION UTILISANT LE PROTOCOLE INTERNET PERMETTANT LE PROCÉDÉ

(30) Priority: 14.08.2007 KR 20070081782
(43) Date of publication of application: 25.11.2009
(73) Proprietor: LG Electronics Inc., Seoul 150-721 (KR)
(72) Inventor: HONG, Yeon Hyuk, Gumi-si Gyeongsangbuk-do 730-070 (KR)
(74) Representative: Cabinet Plasseraud
(86) International application number: PCT/KR2008/002272
(87) International publication number: WO 2009/022785

(56) References cited:
- EP-A- 1 161 087
- EP-A- 1 473 934
- EP-A2- 1 161 087
- EP-A2- 1 713 281
- US-A1- 2004 091 235
- US-A1- 2005 216 534
- US-A1- 2007 157 281

## Description

### Technical Field

The present invention relates to an operating method of an Internet Protocol (IP) television (TV) including a storage medium, and an IP TV employing the same, and more particularly, to an operating method of an IP TV which determines whether content data, received over an Internet network and stored in the IP TV, is present in an Internet server, determine whether to delete the stored content data, and an IP TV employing the same.

### Background Art

An Internet Protocol (IP) television (TV), which has nowadays become widespread, is a device that receives moving image contents or broadcast programs using the Internet and displays them. This IP TV may be considered to be one type of digital convergence in that it is a convergence of Internet and TV.

Using the IP TV, the user can receive various contents and additional services provided from the Internet, such as movie appreciation, home shopping, home banking, online games and MP3, not to mention Internet searching.
EP 1 473 934 describes a video data management method for a video data recording apparatus
EP 1 161 087 describes the storage of broadcast data on a hard disk.

However, as contents or additional services to be provided to the user become more various, the capacity of content data to be stored in a storage medium included in the IP TV increases, resulting in a need for a larger-capacity storage medium to be provided in the IP TV.

At present, this problem is more serious in that the capacity of content data being provided is on an increasing trend toward large capacity.

Therefore, there is an increasing need for the development of a technique capable of automatically arranging contents stored in a storage medium of an IP TV so that the user can conveniently use the IP TV.

### Disclosure of Invention

### Technical Problem

An object of the present invention devised to solve the problem lies on an operating method of an IP TV which, when a content stored in an IP TV including a storage medium therein is a content existing in an Internet server, automatically deletes the stored content to efficiently manage the storage capacity of the storage medium, and an IP TV employing the same.

### Technical Solution

The object of the present invention can be achieved by providing an operating method of an Internet Protocol (IP) television (TV) comprising: storing first content data in a storage medium of the IP TV after receiving and decoding the first content data; detecting information of second content data stored in the storage medium if it is determined that a storage space of the storage medium to store the first content data is deficient; comparing the detected information of the second content data with information of third content data provided from a content server; and deleting the second content data from the storage medium if the information of the second content data is the same as the information of the third content data as a result of the comparison.

In another aspect of the present invention, provided herein is an IP TV comprising: a personal video recorder (PVR) unit for storing first content data after the first content data is received and decoded; a data information detector for detecting information of second content data stored in the PVR unit if it is determined that a storage space of the PVR unit to store the first content data is deficient; and a controller for comparing the detected information of the second content data with information of third content data provided from a certain content server, and deleting the second content data from the PVR unit if the information of the second content data is the same as the information of the third content data as a result of the comparison.

### Advantageous Effects

According to the present invention, when content data stored in a storage medium of an IP TV is content data downloaded from an Internet server, it is automatically deleted. Therefore, it is possible to efficiently manage the storage medium of the IP TV having a limited storage space.

Further, content data downloaded from the Internet server is deleted in the order of older content data based on day information of the content data. That is, less important content data can be deleted. Therefore, it is possible to maximize the user's convenience by automatically deleting content data based on content information and day information.

### Brief Description of the Drawings

The accompanying drawings, which are included to provide a further understanding of the invention, illustrate embodiments of the invention and together with the description serve to explain the principle of the invention.

In the drawings:

FIG. 1 is a block diagram schematically showing the configuration and networking of an IP TV according to one embodiment of the present invention.

FIG. 2 is a flowchart illustrating a process of identifying information of content data stored in an IP TV, according to one embodiment of the present invention.

FIG. 3 is a flowchart illustrating an operating method of an IP TV according to one embodiment of the present invention.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

An operating method of an IP TV and an IP TV employing the same according to the present invention will hereinafter be described in detail with reference to the annexed drawings.

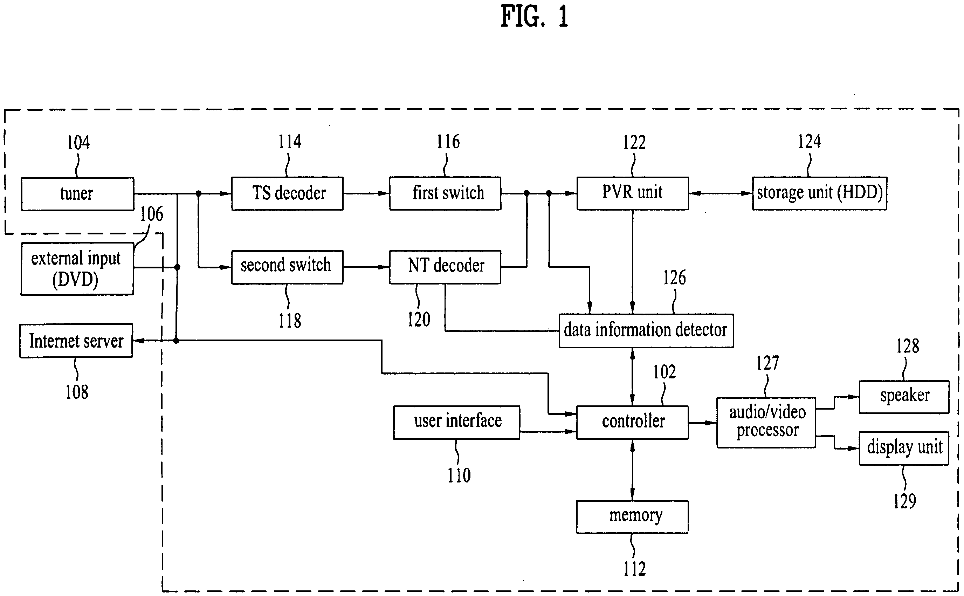

FIG. 1 is a block diagram schematically showing the configuration and networking of an IP TV according to one embodiment of the present invention.

As shown in FIG. 1, the IP TV according to the present embodiment is a TV capable of receiving digital/analog broadcast data, and comprises a controller 102 for controlling the entire operation of the TV, a tuner 104 for performing a broadcast channel tuning operation under the control of the controller 102, a transport stream (TS) decoder 114 for processing a digital broadcast signal, an NTSC (NT) decoder 120 for processing an analog broadcast signal, a personal video recorder (PVR) unit 122 for recording/storing or temporarily storing a broadcast signal received through the tuner 104 or data inputted from an Internet server 108 or an external input device 106 such as a digital versatile disc (DVD) player according to the user s selection, a data information detector 126 for detecting IP address information included in the header of packet data downloaded from the Internet server 108, and an audio/video processor 127 for processing the processed digital or analog broadcast signal or broadcast data provided from the PVR unit 122 and outputting the processed signal or data to a speaker 128 and a display unit 129. Also, the IP TV according to the present embodiment is connectable with the external input device 106 such as the DVD player or the Internet server 108, which provides content data over the Internet.

The controller 102 controls the entire operation of the IP TV. Particularly, according to the present embodiment, when content data is received by the IP TV, the controller 102 can control the IP TV to store the received content data in the PVR unit 122 according to the user s selection, while controlling the IP TV to display the received content data on the screen of the IP TV.

Also, in the case where a content received by the IP TV is an Internet broadcast, the controller 102 controls the IP TV to automatically store content data provided from the Internet server 108 and information (for example, IP address information) of the content data in a storage medium (for example, the PVR unit 122).

At this time, when the storage space of the storage medium to store the content data is deficient, the controller 102 detects information of each content data (for example, an IP address of an Internet server having provided each content data) stored in the storage medium to determine whether content data downloaded from the Internet server 108 is present among the content data stored in the storage medium.

Then, the controller 102 compares the detected IP address of each content data stored in the storage medium with an IP address of each content data existing in the Internet server 108. If the detected IP address of any one of the content data stored in the storage medium is the same as the IP address of any one of the content data existing in the Internet server 108 as a result of the comparison, the controller 102 deletes the content data having the detected IP address stored in the storage medium to secure the storage space of the storage medium.

At this time, the controller 102 can determine IP addresses of content data with reference to a given database included in the Internet server 108 after accessing the Internet server 108.

A user interface 110 transmits various commands or information inputted through a keypad provided in the body of the TV or a remote controller to the controller 102. Preferably, the user may select and input a broadcast program to be recorded in the PVR unit 122.

The tuner 104 tunes any one of terrestrial or cable broadcast channels under the control of the controller 102, and provides a broadcast signal received over the tuned channel to the TS decoder 114 when the received broadcast signal is a digital signal and to the NT decoder 120 when the received broadcast signal is an analog signal.

Also, various content data inputted from the external input device 106 or from the Internet server 108 over an Internet network is provided to the TS decoder 114 when the inputted content data is a digital signal and to the NT decoder 120 when the inputted content data is an analog signal.

The TS decoder 114, which processes a digital broadcast signal, receives a digital broadcast signal from any one of the tuner 104, external input device 106 and Internet server 108, selected by the user, decodes the received digital broadcast signal to convert it into audio, video and data streams, and transmits the converted audio, video and data streams to a first switch 116.

The first switch 116 stores the audio, video and data streams in the PVR unit 122 under the control of the controller 102.

A second switch 118 receives an analog broadcast signal provided from the tuner 104, an external input signal and a signal provided from the Internet server 108, selects any one of the received three signals under the control of the controller 102 and provides the selected signal to the NTSC (NT) decoder 120.

The NTSC (NT) decoder 120, which processes an analog broadcast signal, receives the analog broadcast signal, external input signal or Internet content provided from the second switch 118, decodes it into audio data and video data and provides the audio data and video data to the PVR unit 122.

The PVR unit 122 stores the audio, video and data streams of the digital broadcast signal in a storage unit 124 under the control of the controller 102. Alternatively, the PVR unit 122 MPEG-encodes the audio data and video data of the analog broadcast signal into audio and video streams and stores the audio and video streams in the storage unit 124.

The data information detector 126, when the storage space of the PVR unit 122 is deficient, detects packet header information of content data stored in the PVR unit 122 under the control of the controller 102, extracts an IP address from the detected packet header information and transmits the extracted IP address to the controller 102.

The audio/video processor 127 processes one or more audio and video data and outputs the processed audio data to the speaker 128 and the processed video data to the display unit 129, respectively.

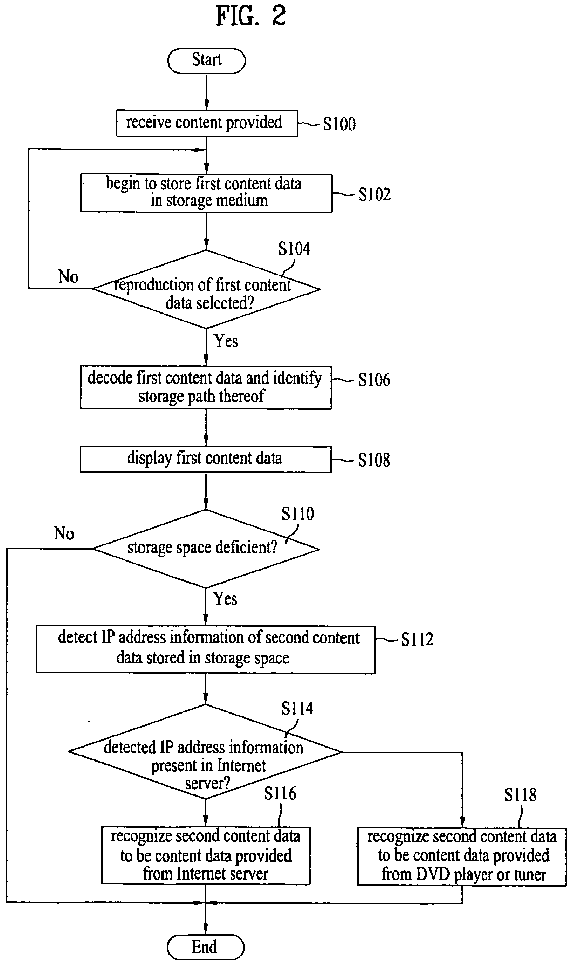

FIG. 2 is a flowchart illustrating a process of identifying information of content data stored in an IP TV, according to one embodiment of the present invention.

First, the IP TV receives first content data inputted along a path selected by the user (S100), begins to store the received first content data in a storage medium (S102) and receives a reproduction selection signal for the first content data inputted by the user (S104).

A decoder decodes the first content data selected by the user, identifies a path along which the first content data is received and stored by the IP TV (S106), and displays the first content data (S108).

Thereafter, the controller 102 periodically checks the storage space of the storage medium, or PVR unit 122, to determine whether the storage space of the PVR unit 122 is deficient (S110). At this time, in the case where the PVR unit 122 fails to receive the currently provided first content data due to deficiency of the storage space thereof, the controller 102 controls the data information detector 126 to detect information (for example, IP address information) of second content data stored in the PVR unit 122, in order to secure the storage space of the PVR unit 122 (S112).

Then, the data information detector 126 detects packet header information of the second content data stored in the PVR unit 122 under the control of the controller 102, extracts IP address information from the detected packet header information and transmits the extracted IP address information to the controller 102.

Thereafter, the controller 102 compares the IP address information transmitted from the data information detector 126 with IP address information of third content data provided from the Internet server 108 (S114). If the two IP address information are the same as a result of the comparison, namely, if the second content data is present in the Internet server 108, the controller 102 recognizes the second content data to be Internet content data downloaded from the Internet server 108 (S116).

On the other hand, in the case where no IP address information is detected by the data information detector 126 or the same IP address information is not present in the Internet server 108, the controller 102 recognizes the second content data to be data inputted from the DVD player 106 or a broadcast signal received through the tuner 104 (S118).

If the storage path of the second content data stored in the storage medium, or PVR unit 122, is identified through the IP address information in this manner, the controller 102 automatically deletes the second content data from the PVR unit 122 when it is content data downloaded from the Internet server 108.

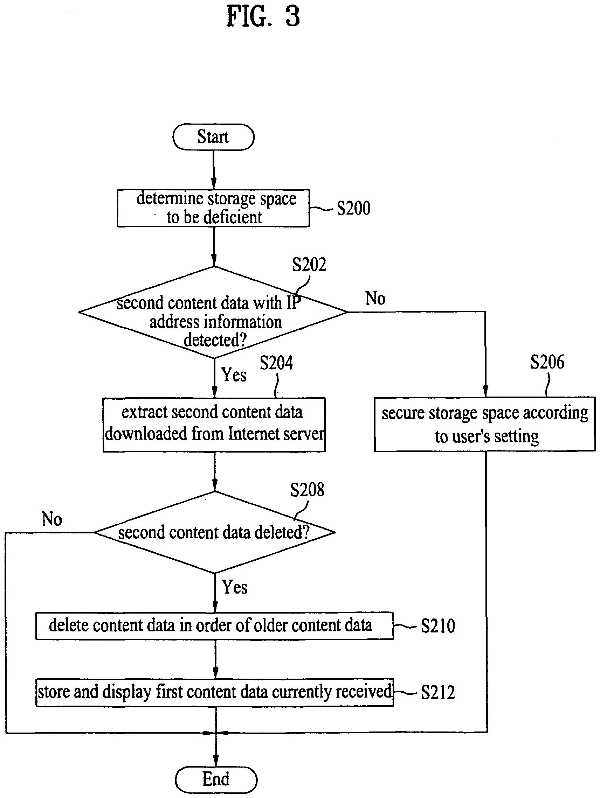

This process will hereinafter be described in more detail with reference to FIG. 3.

FIG. 3 is a flowchart illustrating an operating method of an IP TV according to one embodiment of the present invention.

As shown in FIG. 3, if the storage space of a storage medium, or PVR unit 122, becomes deficient in the middle of displaying first content data selected by the user (S200), the controller 102 controls the data information detector 126 to detect second content data having IP address information among content data stored in the PVR unit 122.

Then, the data information detector 126 determines whether IP address information is present in the content data stored in the PVR unit 122 (S202), and, if IP address information is present in the content data stored in the PVR unit 122, detects the IP address information of the second content data and provides it to the controller 102.

Thereafter, the controller 102 compares the IP address information of the second content data detected by the data information detector 126 with IP address information of third content data provided from the Internet server 108 to determine whether the two IP address information are the same (S204).

If the IP address information of the second content data stored in the PVR unit 122 is the same as the IP address information of the third content data provided from the Internet server 108, the controller 102 deletes the second content data stored in the PVR unit 122 (S108).

At this time, for detection of the IP address information of the second content data, the controller 102 detects the IP address information in the order of longer storage periods of content data. Also, if the second content data having the detected IP address information is present in the Internet server 108, the controller 102 automatically deletes the second content data, so as to secure the storage space of the PVR unit 122 (S210).

On the other hand, when selecting content data for determination as to whether the storage path of the second content data in the PVR unit 122 has resulted from downloading of the second content data from the Internet server 108, the controller 102 may detect and delete the content data in the order of longer storage periods thereof. Alternatively, the controller 102 may search for IP address information in the order of ascending genre or channel preferences and delete content data having the searched IP address information from the PVR unit 122 upon determining that the content data is present in the Internet server 108.

Then, the IP TV stores the first content data, selected by the user and currently received, in the PVR unit 122 having the secured storage space and outputs the first content data to the display unit 129 (S212).

On the other hand, in the case where it is determined at step S202 that no second content data having IP address information is present in the PVR unit 122, the controller 102 deletes content data stored in the PVR unit 122 according to a method set as a default or a method set by the user to secure the storage space for the first content data currently received (S206).

Thereafter, if the storage space of the PVR unit 122 is secured, the controller 102 displays the currently received first content data on the screen at the same time as storing it in the PVR unit 122 (S212).

### Mode for the Invention

Various embodiments have been described in the best mode for canying out the invention.

### Industrial Applicability

As apparent from the above description, according to the present invention, when the storage space of an IP TV is deficient, content data, downloaded from an Internet server and stored in a storage medium of the IP TV, is automatically deleted. Therefore, it is possible to efficiently manage the storage medium of the IP TV having the limited storage space.

## Claims

1. An operating method of an Internet Protocol (IP) television (TV), the IP TV including a storage medium, when it is determined that a storage space of the storage medium to store first content data is deficient when the first content data is received, decoded and then stored in the storage medium, the method comprising:
detecting first information of second content data stored in the storage medium (S112) the first information including IP address of the second content data;
comparing the detected first information of the second content data with second information of third content data provided from a content server (S114), the second information including IP address of the third content data; and
deleting the second content data from the storage medium if the second content data is the same as the third content data based on comparing the content data based on the IP addresses of the second content data and the third content data (S210).

2. The operating method according to claim 1, wherein the second content data is received from an Internet server.

3. The operating method according to claim 1, wherein the step of deleting the second content data comprises deleting the second content data based on any one of a storage period, genre and preference of the second content data.

4. The operating method according to claim 1, further comprising:
if the first information of the second content data is not the same as the second information of the third content data as a result of the comparison, deleting the second content data from the storage medium in the storage order of the second content data to secure the storage space.

5. The operating method according to claim 2, wherein the step of detecting the first information of the second content data stored in the storage medium comprises detecting the IP address information from a packet header of the second content data.

6. The operating method according to claim 1, wherein the step of comparing the detected first information of the second content data with the second information of the third content data provided from the certain content server comprises comparing the detected first information of the second content data with the second information of the third content data provided from a database of the content server.

7. An IP TV having a personal video recorder (PVR) unit (122) for storing first content data after the first content data is received and decoded, comprising:
a data information detector (126) for detecting first information of second content data stored in the PVR unit if it is determined that a storage space (124) of the PVR unit to store the first content data is deficient; and
a controller (102) for comparing the detected first information of the second content data, the first information including IP address of the second content data, with second information of third content data provided from a content server, the second information including IP address of the third content data, and deleting the second content data from the PVR unit if the second content data is the same as the third content data based on comparing the content data based on the IP addresses of the second content data and the third content data.

8. The IP TV according to claim 7, wherein the second content data is received from an Internet server.

9. The IP TV according to claim 7, wherein the controller deletes the second content data based on any one of a storage period, genre and preference of the second content data.

10. The IP TV according to claim 7, wherein the controller, if the first information of the second content data is not the same as the second information of the third content data as a result of the comparison, deletes the second content data from the PVR unit in the storage order of the second content data to secure the storage space.

11. The IP TV according to claim 7, wherein the data information detector detects the IP address information from packet header data of the second content data.

12. The IP TV according to claim 7, wherein the controller compares the detected first information of the second content data with the second information of the third content data provided from a database of the content server.

## Patentansprüche

1. Bedienungsverfahren für ein Internetprotokoll-Fernsehen (IPTV), wobei das IPTV ein Speichermedium einschließt, wenn festgestellt wird, dass eine Speicherkapazität des Speichermediums zum Speichern erster Inhaltsdaten unzureichend ist, wenn die ersten Inhaltsdaten empfangen, decodiert und dann in dem Speichermedium gespeichert werden, das Verfahren aufweist:
Erfassen einer ersten Information von in dem Speichermedium (S112) gespeicherten zweiten Inhaltsdaten, wobei die erste Information eine IP-Adresse der zweiten Inhaltsdaten enthält;
Vergleich der erfassten ersten Information der zweiten Inhaltsdaten mit einer zweiten Information von dritten Inhaltsdaten, die von einem Inhaltsserver (S114) bereitgestellt werden, wobei die zweite Information eine IP-Adresse der dritten Inhaltsdaten enthält; und
Löschen der zweiten Inhaltsdaten aus dem Speichermedium, wenn anhand eines Vergleichs der Inhaltsdaten auf der Basis der IP-Adressen der zweiten Inhaltsdaten und der dritten Inhaltsdaten die zweiten Inhaltsdaten die gleichen sind wie die dritten Inhaltsdaten (S210).

2. Bedienungsverfahren nach Anspruch 1, wobei die zweiten Inhaltsdaten von einem Internetserver empfangen werden.

3. Bedienungsverfahren nach Anspruch 1, wobei der Schritt zum Löschen der zweiten Inhaltsdaten das Löschen der zweiten Inhaltsdaten auf der Basis eines der Kriterien Speicherungszeitrum, Genre und Vorrang der zweiten Inhaltsdaten beinhaltet.

4. Bedienungsverfahren nach Anspruch 1, das ferner aufweist:
wenn als Ergebnis des Vergleichs die erste Information der zweiten Inhaltsdaten nicht gleich der zweiten Information der dritten Inhaltsdaten ist, Löschen der zweiten Inhaltsdaten aus dem Speichermedium in der Reihenfolge der Speicherung der zweiten Inhaltsdaten, um die Speicherkapazität zu sichern.

5. Bedienungsverfahren nach Anspruch 2, wobei der Schritt zum Erfassen der ersten Information der im Speichermedium gespeicherten zweiten Inhaltsdaten das Löschen der IP-Adressen-Information aus einem Datenfeld-Vorsatz der zweiten Inhaltsdaten beinhaltet.

6. Bedienungsverfahren nach Anspruch 1, wobei der Schritt zum Vergleich der erfassten ersten Information der zweiten Inhaltsdaten mit der zweiten Information der von dem sicheren Inhaltsserver bereitgestellten dritten Inhaltsdaten den Vergleich der erfassten ersten Information der zweiten Inhaltsdaten mit der zweiten Information der von einer Datenbank des Inhaltsservers bereitgestellten dritten Inhaltsdaten beinhaltet.

7. IPTV mit einer persönlichen Videorecorder-(PVR-) Einheit (122) zum Speichern von ersten Inhaltsdaten nach Empfang und Decodierung der ersten Inhaltsdaten, wobei das IPTV aufweist:
einen Dateninformationsdetektor (126) zum Erfassen der ersten Information von in der PVR-Einheit gespeicherten zweiten Inhaltsdaten, wenn festgestellt wird, dass eine Speicherkapazität (124) der PVR-Einheit zum Speichern der ersten Inhaltsdaten unzureichend ist; und
eine Steuereinheit (102) zum Vergleich der erfassten ersten Information der zweiten Inhaltsdaten, wobei die erste Information die IP-Adresse der zweiten Inhaltsdaten enthält, mit der zweiten Information von dritten Inhaltsdaten, die von einem Inhaltsserver bereitgestellt werden, wobei die zweite Information die IP-Adresse der dritten Inhaltsdaten enthält, und zum Löschen der zweiten Inhaltsdaten aus der PVR-Einheit, wenn anhand des Vergleichs der Inhaltsdaten auf der Basis der IP-Adressen der zweiten Inhaltsdaten und der dritten Inhaltsdaten die zweiten Inhaltsdaten gleich den dritten Inhaltsdaten sind.

8. IPTV nach Anspruch 7, wobei die zweiten Inhaltsdaten von einem Internetserver empfangen werden.

9. IPTV nach Anspruch 7, wobei die Steuereinheit die zweiten Inhaltsdaten auf der Basis eines der Kriterien Speicherungszeitrum, Genre und Vorrang der zweiten Inhaltsdaten löscht.

10. IPTV nach Anspruch 7, wobei die Steuereinheit, wenn als Ergebnis des Vergleichs die erste Information der zweiten Inhaltsdaten nicht gleich der zweiten Information der dritten Inhaltsdaten ist, die zweiten Inhaltsdaten aus der PVR-Einheit in der Speicherungsreihenfolge der zweiten Inhaltsdaten löscht, um die Speicherkapazität zu sichern.

11. IPTV nach Anspruch 7, wobei der Dateninformationsdetektor die IP-Adressen-Information aus Datenfeld-Vorsatz-Daten der zweiten Inhaltsdaten erfasst.

12. IPTV nach Anspruch 7, wobei die Steuereinheit die erfasste erste Information der zweiten Inhaltsdaten mit der von einer Datenbank des Inhaltsservers bereitgestellten zweiten Information der dritten Inhaltsdaten vergleicht.

## Revendications

1. Procédé de fonctionnement d'une télévision utilisant le protocole Internet, IP TV, l'IP TV comprenant un support de stockage, lorsqu'il est déterminé qu'un espace de stockage du support de stockage pour stocker des premières données de contenu est insuffisant à la réception, au décodage puis au stockage des premières données de contenu dans le support de stockage, le procédé comprenant :
la détection de premières informations de deuxièmes données de contenu stockées dans le support de stockage (S 112), les premières informations comprenant l'adresse IP des deuxièmes données de contenu ;
la comparaison des premières informations détectées des deuxièmes données de contenu aux deuxièmes informations de troisièmes données de contenu fournies d'un serveur de contenu (S 114), les deuxièmes informations comprenant l'adresse IP des troisièmes données de contenu ; et
la suppression des deuxièmes données de contenu du support de stockage si les deuxièmes données de contenu sont identiques aux troisièmes données de contenu sur la base de la comparaison des données de contenu d'après les adresses IP des deuxièmes données de contenu et des troisièmes données de contenu (S210).

2. Procédé de fonctionnement selon la revendication 1, dans lequel les deuxièmes données de contenu sont reçues d'un serveur Internet.

3. Procédé de fonctionnement selon la revendication 1, dans lequel l'étape de suppression des deuxièmes données de contenu comprend la suppression des deuxièmes données de contenu sur la base de l'un quelconque d'une période de stockage, d'un genre et d'une préférence des deuxièmes données de contenu.

4. Procédé de fonctionnement selon la revendication 1, comprenant en outre :
si les premières informations des deuxièmes données de contenu ne sont pas identiques aux deuxièmes informations des troisièmes données de contenu d'après la comparaison, la suppression des deuxièmes données de contenu du support de stockage dans l'ordre de stockage des deuxièmes données de contenu pour libérer de l'espace de stockage.

5. Procédé de fonctionnement selon la revendication 2, dans lequel l'étape de la détection des premières informations des deuxièmes données de contenu stockées dans le support de stockage comprend la détection des informations d'adresse IP d'un en-tête de paquet des deuxièmes données de contenu.

6. Procédé de fonctionnement selon la revendication 1, dans lequel l'étape de comparaison des premières informations détectées des deuxièmes données de contenu aux deuxièmes informations des troisièmes données de contenu fournies du serveur de contenu comprend la comparaison des premières informations détectées des deuxièmes données de contenu aux deuxièmes informations des troisièmes données de contenu fournies d'une base de données du serveur de contenu.

7. Télévision utilisant le protocole Internet, IP TV, comportant une unité d'enregistreur vidéo personnel, PVR, (122) pour stocker des premières données de contenu après la réception et le décodage des premières données de contenu, comprenant :
un détecteur d'informations de données (126) pour détecter des premières informations de deuxièmes données de contenu stockées dans l'unité PVR s'il est déterminé qu'un espace de stockage (124) de l'unité PVR pour stocker les premières données de contenu est insuffisant ; et
un organe de commande (102) pour comparer les premières informations détectées des deuxièmes données de contenu, les premières informations comprenant une adresse IP des deuxièmes données de contenu, aux deuxièmes informations de troisièmes données de contenu fournies d'un serveur de contenu, les deuxièmes informations comprenant une adresse IP des troisièmes données de contenu, et pour supprimer les deuxièmes données de contenu de l'unité PVR si les deuxièmes données de contenu sont identiques aux troisièmes données de contenu sur la base de la comparaison des données de contenu d'après les adresses IP des deuxièmes données de contenu et des troisièmes données de contenu.

8. IP TV selon la revendication 7, dans laquelle les deuxièmes données de contenu sont reçues d'un serveur Internet.

9. IP TV selon la revendication 7, dans laquelle l'organe de commande supprime les deuxièmes données de contenu sur la base de l'un quelconque d'une période de stockage, d'un genre et d'une préférence des deuxièmes données de contenu.

10. IP TV selon la revendication 7, dans laquelle l'organe de commande, si les premières informations des deuxièmes données de contenu ne sont pas identiques aux deuxièmes informations des troisièmes données de contenu d'après la comparaison, supprime les deuxièmes données de contenu de l'unité PVR dans l'ordre de stockage des deuxièmes données de contenu pour libérer de l'espace de stockage.

11. IP TV selon la revendication 7, dans laquelle le détecteur d'informations de données détecte les informations d'adresse IP des données d'en-tête de paquet des deuxièmes données de contenu.

12. IP TV selon la revendication 7, dans laquelle l'organe de commande compare les premières informations détectées des deuxièmes données de contenu aux deuxièmes informations des troisièmes données de contenu fournies d'une base de données du serveur de contenu.
